# EUROPEAN PATENT APPLICATION

(11) **EP 1 365 553 A1**
(43) Date of publication of application: **26.11.2003**
(21) Application number: 02354084.2
(22) Date of filing: 23.05.2002
(51) Int. Cl.: H04L 12/58, G06F 17/28

(54) **Method and device for instant messaging**

(71) Applicant: Accenture Global Services GmbH, 8212 Neuhausen Am Rheinfall, Schaffhausen (CH)
(72) Inventor: Montet, Ivan, 06560 Valbonne (FR); Dalmasso, Eric, 06000 Nice (FR); Siegel, Adam, Washington D.C 20009 (US)
(74) Representative: de Beaumont, Michel

(57) **Abstract**

An instant messaging (IM) system for providing automatic IM services includes a server (34), at least one client (32) connected to the server, an automatic portal unit connected to the server, and at least one automatic service unit connected to the server. If the automatic portal unit receives a service-activation input from a first client, the automatic portal unit configures a first automatic service unit to provide services to selected clients based on the service-activation input. If the first automatic service unit is configured to provide services to the selected clients, the first automatic service unit provides service responses when receiving communications from the selected clients.

## Description

### BACKGROUND OF THE INVENTION

### Field of Invention

The present invention relates to communication systems generally and more particularly to instant messaging systems.

### Description of Related Art

With the globalization of the economy, it has become increasingly important to have new ways for people to communicate together, both quickly and easily. Instant messaging (IM) services and chat room services have become increasingly popular for real-time communication, both for general conversation and for more specialized dialogs. In general, instant messaging is a method that enables communication on a one-to-one basis or in groups using standard IP (Internet Protocol). For example, on-line areas known as "chat rooms" enable interactive communication (i.e., "chat") within a group of users often on specialized topics. In this context, "chat" (or other instant messaging) refers to messages that are typically typed using a keyboard and transmitted over a network in a real-time setting. (e.g., AOL Instant Messenger (AIM), MSN Explorer, Yahoo! Messenger, ICQ).

In a conventional chat room users typically send and receive text messages at individual terminals that are linked via some combination of local networks and the Internet. The response is generally perceived by the users as a real time experience although there may be delays in some operational settings. As with other modes of communication, language barriers have become more common as users from around the world have increasingly used these systems for exchanging ideas and developing commerce.

Chat room infrastructure for providing language-translation support is typically very limited. For example, chat room users may be forced to supply their own translation capability when communicating with others using different languages. This approach may be particularly cumbersome when the relevant languages are not known in advance or when the mix of languages changes quickly as chat room users come and go. In a similar way, chat room infrastructure typically does not provide adequate support for other knowledge-based services (e.g., news, sports, technical data).

Therefore, there is a need for chat room support for language-translation services and other knowledge-based services in a flexible way that is easy to use in a real-time chat room environment.

### SUMMARY OF INVENTION

In one embodiment of the present invention, an instant messaging (IM) system for providing automatic IM services includes: a server, at least one client connected to the server, an automatic portal unit connected to the server, and at least one automatic service unit connected to the server. If the automatic portal unit receives a service-activation input from a first client, the automatic portal unit configures a first automatic service unit to provide services to selected clients based on the service-activation input. If the first automatic service unit is configured to provide services to the selected clients, the first automatic service unit provides service responses when receiving communications from the selected clients.

According to one aspect of this embodiment, the services may include translation services such as specialized for translation from a first language to a second language.

According to another aspect, the first automatic service unit may connect to an external service device, the external service device being adapted to receive external service requests and to send external service responses that enable service responses from the first automatic service unit. If the first automatic service unit is configured to provide services to the selected clients and the first automatic service unit receives a communication from one of the selected clients, the first automatic service unit sends an external service request to the external service device. If the external service device receives the external service request, the external service device sends an external service response to the first automatic service unit to enable a service response from the first automatic service unit.

According to another aspect, the IM system may further includes a service gateway connected to the first automatic service unit. The service gateway connects to a plurality of external service devices, each external service device being adapted to receive external service requests and to send external service responses that enable service responses from the first automatic service unit. If the first automatic service unit is configured to provide services to the selected clients and the first automatic service unit receives a communication from one of the selected clients, the first automatic service unit sends an external service request to the service gateway, and the service gateway sends the external service request to a first external service device based on the service-activation input. If the first external service device receives the external service request, the first external service device sends an external service response to the service gateway, and the service gateway sends the external service response to the first automatic service unit to enable a service response from the first automatic service unit.

According to another aspect, services may be deactivated automatically. If the first automatic service unit is configured to provide services to the selected clients and the automatic portal unit receives a service-deactivation input from the first client, the automatic portal unit configures the first automatic service unit to stop providing services to the selected clients based on the service-deactivation input.

According to another aspect, the automatic portal unit may maintains a status for at least one client corresponding to privileges for the automatic IM services.

According to other aspects, the invention may be implemented as a method for providing automatic IM services in an IM system or as a computer program for providing automatic IM services in an IM system

In another embodiment of the present invention, an automatic portal unit for an IM system provides automatic IM services. The IM system includes a server connected to the automatic portal unit, at least one client connected to the server, and at least one automatic service unit connected to the server. The automatic portal unit includes executable instructions for: receiving a service-activation input from a first client, and configuring a first automatic service unit to provide services to selected clients based on the service-activation input so that the first automatic service unit provides service responses when receiving communications from the selected clients. This embodiment may include aspects described above with reference to other embodiments.

In another embodiment of the present invention, an automatic service unit for an IM system provides automatic IM services. The IM system includes a server connected to the automatic service unit, an automatic portal unit connected to the server, and at least one client connected to the server. The automatic service unit includes executable instructions for: accepting a configuration from the automatic portal unit to provide services to selected clients, and providing service responses when receiving communications from the selected clients if the automatic service unit is configured to provide services to the selected clients. This embodiment may include aspects described above with reference to other embodiments.

The present invention enables automatic knowledge-based services including language translation services in a flexible way that is easy to use in a real-time chat room environment. In one operational setting for example, a chat room user invites a portal unit into the chat room to provide automatic language translation services. The portal unit then automatically joins the chat room and appears like another chat room user to the server that maintains the chat room. The portal unit then queries each chat room user for his or her language preference. Then the portal unit consolidates the responses and determines which service units will be needed (e.g., language-pair translators such as a French-to-English translator). The portal unit then invites the service units into the chat room. These service unit automatically joint the chat room and appear like additional chat room users to the server that maintains the chat room. The portal unit automatically links these service units to specific users (e.g., as "buddies") so that for example a French-speaking user is linked to a French-to-English translator for communicating with an English-speaking user in the chat room. As users enter and leave the chat room, the portal unit automatically updates the service configuration as in, for example, dismissing a French-to-English translator when no French-speaking users are left in the chat room. In this way service units can be managed automatically by the portal unit so that they participate in the chat room analogously to the behavior of the actual chat room users while providing services that are tailored to the specific needs of the users.

### BRIEF DESCRIPTION OF THE DRAWINGS

Figure 1 shows an embodiment of the present invention.
Figure 2 shows a process flow associated with the embodiment shown in Figure 1.
Figure 3 shows a process flow associated with the embodiment shown in Figure 1.
Figure 4 shows a typical Internet network configuration as applied to the embodiment shown in Figure 1.
Figure 5 shows a typical general purpose computer as applied to the embodiment shown in Figure 1.
Figures 6A, 6B, 7A, 7B, 8A, 8B, 9A, 9B, 10A, 10B, 11A, 11B, 12A, 12B, 13A, 13A-1, 13A-2, 13B, 14, 15, 16, 17, 18, 19, 20, 21, 19, 23, 24, 25, 26, 27, 28, 29, 30, 31, 32, 33, 34, 35, 36, 37, 38, 39, 40, 41, and 42 show characteristic screen interfaces associated with embodiments of the present invention.

### DETAILED DESCRIPTION OF EXEMPLARY EMBODIMENTS

### System Overview

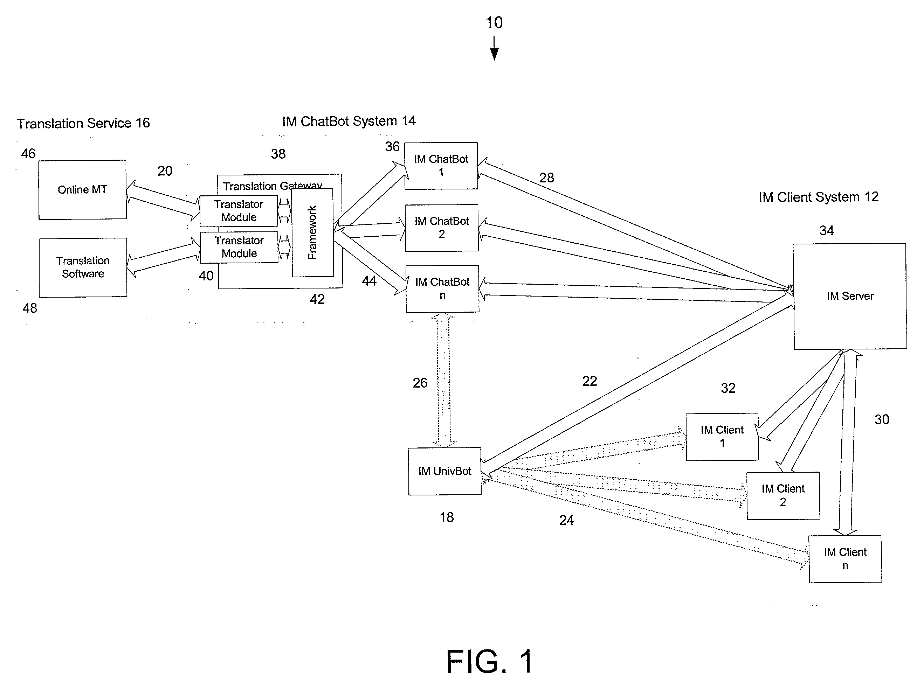

Figure 1 shows an embodiment of an IM (instant messenger) system 10 according to the present invention including an IM client system 12, an IM ChatBot system 14, translation services 16 and an IM UnivBot 18. As discussed below, this system 10 includes connections for data transfer between sub-systems and also internally within sub-systems.

The IM client system 12 provides support for a conventional IM system (e.g., as in implementations by AOL (American Online) or MSN (Microsoft Network)). An IM server 34 connects 30 to IM clients 32. The IM server 34 also provides an interface to external participants such as the elements of the ChatBot system 14. More generally the IM server 34 shown in Figure 1 may be replaced by a chat room server or by some networked combination of IM servers and chat room servers depending on the specific implementation. As used herein, the designation "IM server" (or simply "server") may refer to any of these server configurations consistent with the embodiment shown in Figure 1. In an implementation by America Online, for example, an IM server provides external connectivity under the AOL TOC protocol and is networked with a chat room server that provides internal connectivity for local clients.

The IM ChatBot system 14 includes a number of IM ChatBots 36 that provide translation services to the IM client system 12 by means of connections 28 to the IM server 34. For example in Figure 1 a first, second and third Chatbot 36 are shown although the number is arbitrary. (Note that designations such as "first" and "second" are used here for labeling purposes only and are not intended to be limiting. The designation "first" whether in time or in space does not imply a second item.) Preferably, each ChatBot 36 is specialized for a given translation sequence (e.g., English-to-French or French-to-English). Within the ChatBot system 14, the ChatBots 36 connect 44 to a translation gateway 38 at a framework 42 that integrates translation modules 40. These translation modules 40 also connect 20 to the translation service 16, which provides translation functions at the lowest level through components including Online WEB-based MT (Machine Translation) 46 and in-house translation software 48. Although a single translation service 16 is shown in Figure 1, the translation gateway 38 may access multiple services according to the requirements of a specific implementation. For example, translation services may be specialized to certain languages or groups of languages.

The IM UnivBot 18 effectively integrates the system 10 through a direct connection 22 to the IM server 34. This connection 22 between the UnivBot 18 and the IM server 34 combines with the connection 28 between the IM server 34 and the ChatBots 36 to give an effective connection 26 between the UnivBot 18 and the ChatBots 36. Similarly the connection 22 between the UnivBot 18 and the IM server 34 combines with the connection 30 between the IM server 34 and the clients 32 to give an effective connection 24 between the UnivBot 18 and the clients 32. As discussed below in greater detail, the UnivBot 18 operates as a portal between the ChatBots 36 and the clients 32 through these connections, so that from the clients' 32 perspective the UnivBot 18 is a universal translation robot.

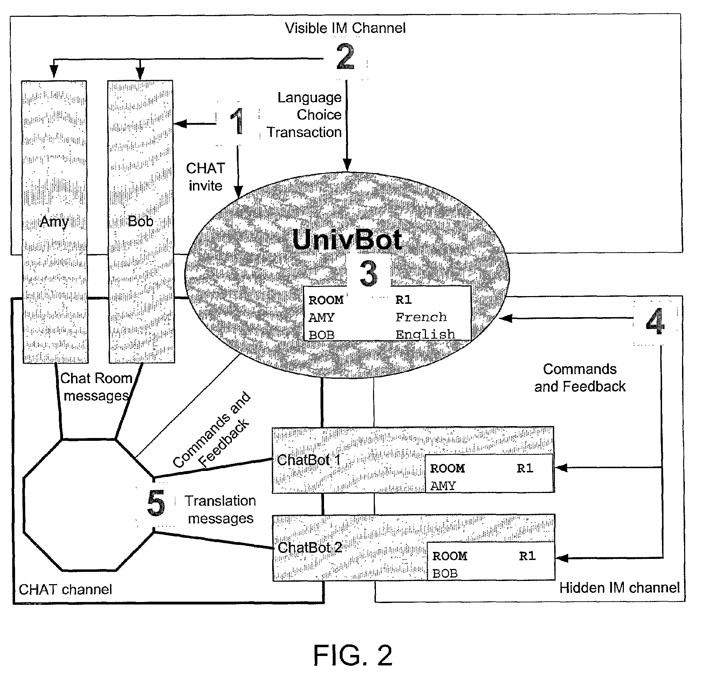

Figure 2 shows an example of the message flow for the system 10 in five steps, where each of the steps is denoted by a blocked number. In Figure 2, Amy and Bob are chat room users (i.e., IM clients 32) in a chat room R1 that is supported by the IM server 34 where ChatBot No. 1 and ChatBot No. 2 (i.e., two IM ChatBots 36) provide translation services. As this example illustrates, the UnivBot 18 mediates between the IM clients 32, the IM ChatBots 36 and the external IM server 34 to seamlessly provide chat room translation support. All communications (e.g., through visible channels and hidden channels) are carried out with an IM window associated with the server 34. More detailed examples including messages in IM windows are presented below. Here the focus is on the interaction between clients 32 (i.e., chat room users) and ChatBots 36 through the UnivBot 18.

In step 1, Bob and Amy join together in a chat room (i.e., room R1). Bob invites the UnivBot 18 to join the same chat room (i.e. room R1). This invitation is carried out on a visible IM channel by means of the connection 24 between the clients 32 with the UnivBot 18. The UnivBot 18 automatically accepts the invitation and joins the chat room.

In step 2, The UnivBot 18 starts a private IM discussion (i.e., outside the chat room R1) with each user (i.e., Bob and Amy) in order to determine the users' languages for that room. This communication is likewise carried out on a visible IM channel by means of the connection 24 between the clients 32 with the UnivBot 18. For example, the UnivBot 18 may make this determination through a conventional menu system. Alternatively, the UnivBot 18 may query for each supported language (e.g., "Do you wish to speak English?") or may rely on identifying whatever language that the user employs.

In step 3, the UnivBot 18 stores users' language and determines which ChatBots 36 are needed for the chat room. In this case the UnivBot 18 recorded that Amy speaks French, that Bob speaks English, and that the chat room is R1.

In step 4, The UnivBot 18 sends room information and requests-to-join to the appropriate ChatBots 36 (i.e., ChatBot No. 1 - French-to-English - for Amy's speech and ChatBot No. 2-English-to-French - for Bob's speech). This communication is carried out on a hidden IM channel by means of the connection 26 between the UnivBot 18 and the ChatBots 36. As is conventionally known by those skilled in the art, a hidden IM channel uses the IM communication protocol to communicate between two parties so that the communication is hidden from others in the chat room. By contrast visible IM channels including the chat room channel are visible to all users in the chat room.

In step 5, ChatBot No. 1 and ChatBot No. 2 each automatically accept their respective requests-to-join the chat room, enter the chat room and begin message translations on the chat channel. Communications on the chat channel shown in Figure 2 are managed by the server 34. The server 34 connects to the IM clients 32 (i.e., Amy and Bob), the IM ChatBots 36, and the UnivBot 18. In this way the Amy and Bob receive and send messages, ChatBot No. 1 and ChatBot No. 2 receive messages and send translation messages, and the UnivBot 18 receives feedback and sends commands.

In this example, the users (i.e., Amy and Bob) in the chat room can interact with the UnivBot 18 through a private IM window. Initially each user communicates his language choice to the UnivBot 18 through the private IM window, and subsequently a user may decide to change his language choice or request suspension of his corresponding translation service. The UnivBot 18 may also receive contextual information as an indirect communication from a user (e.g., Bob has left the chat room). Based on all communications received, the UnivBot 18 sends corresponding commands to ChatBots 36 (e.g. to enter the room or to leave).

In operation, ChatBot No. 1, assigned to translate messages from Amy, listens inside the chat room for any message that Amy types in the chat room (i.e., on the chat channel). ChatBot No. 1 then passes this message as well as an identification of the source and target languages to the Translation Gateway 38. The Translation Gateway 38 then invokes the corresponding Translator Module 40 which handles the desired Source-Target language pair, and this module 40 then accesses the connection 20 to the associated translation service 16 to make the translation (e.g., either through a WEB online MT 46 or an in -house translation software 48).

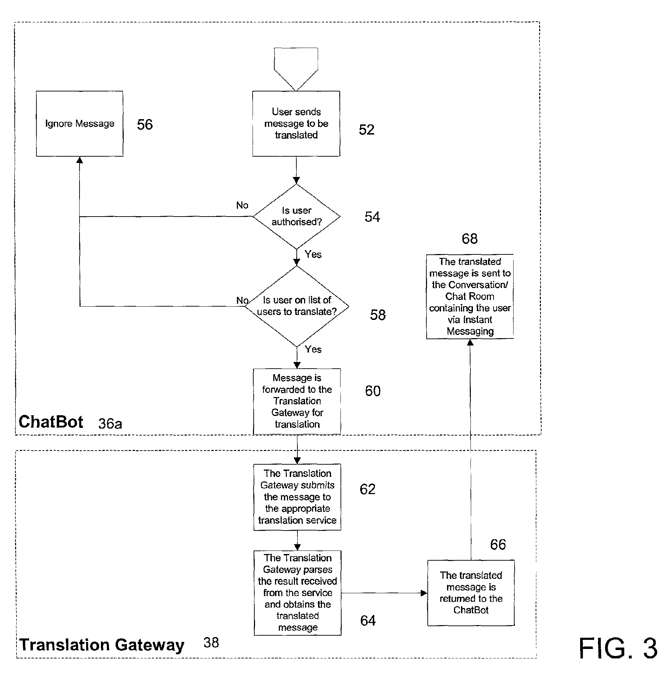

Figure 3 shows the process flow associated with the translation of a user message by a specific ChatBot 36a through its interaction with the translation gateway 38. First a user (e.g. Bob or Amy) enters a message 52 in the IM window associated with the server 34 and the chat room (e.g., chat room R1). The ChatBot 36a, which is monitoring all messages in the chat room, first determines 54 if the user is authorized for the chat room and, if not, ignores the message 56. Next the ChatBot 36a determines 58 if the user is on the list of users for its translation (e.g., English-to-French for an English user) and, if not, ignores the message 56. As discussed above, these decisions steps 54, 58 are made possible by the interaction between the UnivBot 18 and the ChatBot 36a; that is, the UnivBot 18 provides data for the authorized and listed users to the ChatBot 36a when the UnivBot 18 invites the ChatBot 36a into the chat room.

The decision step 54 for authorization may vary according to the details of the implementation. In a typical chat room setting, this step 54 can be effectively bypassed so that after one authorized user invites the UnivBot 18 into the chat room all participants have access to the corresponding translation services. Alternatively in a private conversation between two users in a more general IM setting (e.g., the "dictionary mode" discussed below) this step 54 may be required to verify authorization for each user.

Provided the user is listed, the ChatBot 36a forwards 60 the message to the translation gateway 38 for processing. The translation gateway 38 submits 62 the message to the appropriate translation service 16, which effects a translation and returns this result to the translation gateway 38. The translation gateway 38 then parses and formats the result as needed to obtain 64 the translated message. The translated message is sent 66 to the Chatbot 36a, which in turn sends 68 the translated message to the chat room (i.e., the IM window corresponding to the chat room channel) similarly as any other user in the chat room.

The present invention enables the integration of a broad range of external services for a chat room. In the embodiment shown in Figure 1, the UnivBot 18 provides chat room access to external translation services 16 through a system 14 of ChatBots 36. More generally, the UnivBot 18 may act as a portal for a broad range of services by simply replacing (or augmenting) the translation services 16 to accommodate other needs. For example, the external services may include specialized knowledge (.e.g., current events, sports, movies); then translation gateway 38 in the ChatBot system 14 would become a knowledge gateway. In an embodiment consistent with the above discussion, the ChatBots 36 are generalized as automatic service units and the UnivBot 18 is generalized as an automatic portal unit that manages the service units. As in the example above (Figure 2, Step 2), the portal unit may directly query users for service needs or else identify those needs from the message stream in the chat room.

### Operating Environment

Key elements of the IM system 10 shown in Figure 1 are based on standard Internet connections and general purpose computers. The connections 22, 28, 30 can be conventional Internet connections and the IM computers, including the UnivBot 18, the server 34, the clients 32 and the ChatBots 36, may be general purpose computers. General purpose computers may also be used for operating components of the translation gateway 38 and the translation service 16.

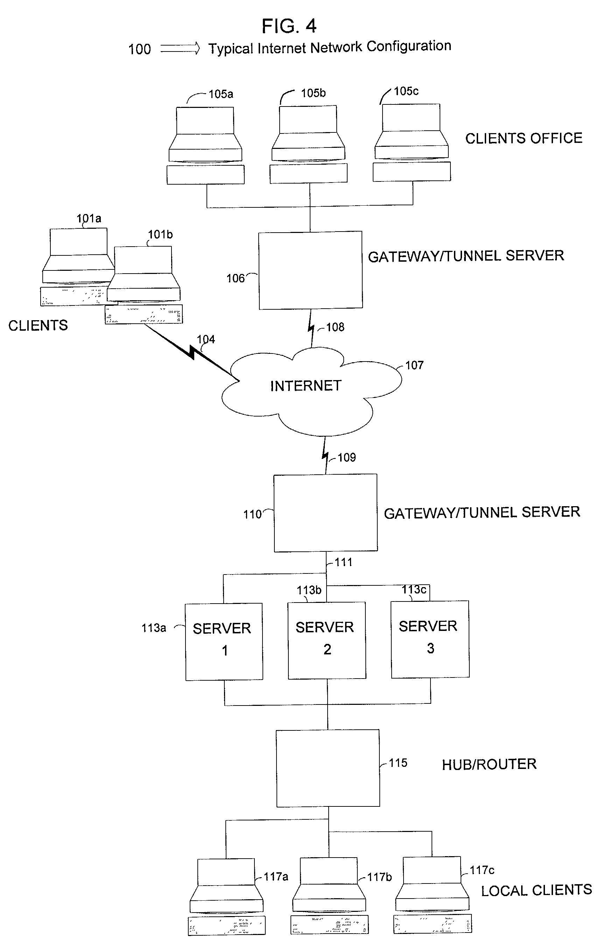

Some of the elements of a typical Internet network configuration 100 are shown in Figure 4, wherein a number of client machines 105 possibly in a branch office of an enterprise, are shown connected to a Gateway/hub/tunnel-server/etc. 106 which is itself connected to the internet 107 via some internet service provider (ISP) connection 108. Also shown are other possible clients 101 similarly connected to the internet 107 via an ISP connection 104, with these units communicating to possibly a home office via an ISP connection 109 to a gateway/tunnel-server 110 which is connected 111 to various enterprise application servers 113 which could be connected through another hub/router 115 to various local clients 117. Any of these servers 113 could function as the IM server 34 shown in Figure 1. Likewise, any of these clients 101, 105, 117 could function as one of the chat room parties in Figure 1 including the UnivBot 18, the server 34, the clients 32. As discussed above, these servers 113 and clients 101, 105, 117 can be general purpose computers.

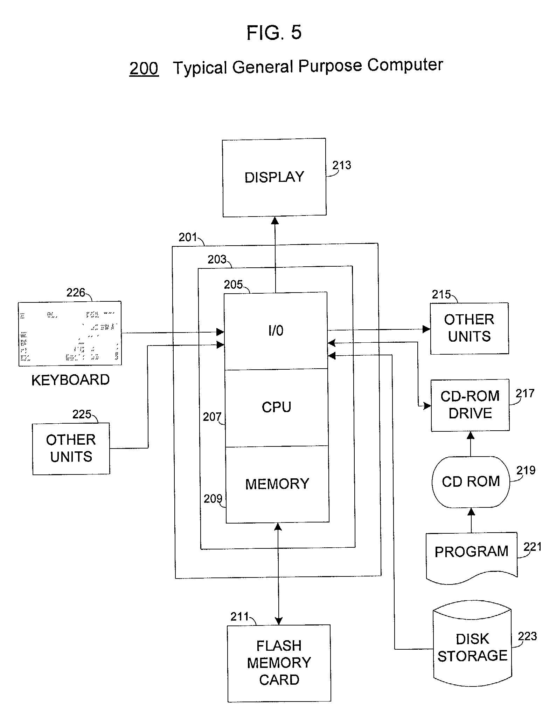

Figure 5 shows a typical general purpose computer 200 with a number of standard components. The main system 201 includes a motherboard 203 having thereon an input/output ("I/O") section 205, one or more central processing units ("CPU") 207, and a memory section 209 which may have a flash memory card 211 related to it. The I/O section 205 is connected to a keyboard 226, other similar general purpose computer units 225, 215, a disk storage unit 223 and a CD-ROM drive unit 217. The CD-ROM drive unit 217 can read a CD-ROM medium 219 which typically contains programs 221 and other data. Logic circuits or other components of these programmed computers will perform series of specifically identified operations associated with the operations of the chat room.

### Additional Embodiments

This section presents embodiments that are specifically adapted for use with two conventional IM systems AIM (AOL Instant Messenger) and MSN (Microsoft Network). These embodiments, which are consistent with the embodiments presented above in connection with Figure 1, provide a universal translation portal-like system for real-time translation of messages via conventional IM systems. Although the discussion here is restricted to two specific IM systems, those skilled in the art will appreciate the broad application of the invention to IM systems and chat rooms generally.

As used here, Accenture Bot is embodiment of the UnivBot 18 of Figure 1 with additional adaptation for use with AIM or MSN. As described below in greater detail, Accenture Bot allows chat room users in a conventional IM setting to access translation robots (i.e., ChatBots 36) in a seamless way so that users are able to communicate with one another where each uses only his own mother tongue.

Within a chat room setting, a user first invites Accenture Bot to join whereupon each chat participant interacts with it to determine his preferred language. Accenture Bot then invites to the chat session appropriate and available translation robots to provide corresponding translation as users communicate with one another. Thus, from the users' perspective, Accenture Bot is a universal translation robot.

Before it can be invited to join a chat room Accenture Bot must first log on to the network (e.g., AIM or MSN) as a normal client registered as "Accenture Bot." It then waits for invitations from users. When receiving an invitation, it automatically accepts it, starts interacting with users, and listens for messages. In addition, it invites the appropriate translation robots in a transparent way based on users' spoken languages choices.

### Multi-user functionality

This part is dedicated to the description of the messages that will be exchanged during a multi-user session (this is equivalent to a chat room in AIM or a conversation with more than two participants (including Accenture Bot) in MSN). Users will be able to access and control the translation service through messages exchanged with Accenture Bot.

### Basic use

An overview of multi-user functionality is given in four phases as:
A user invites Accenture Bot into a multi-user session.
Accenture Bot starts a private session with each user in order to determine users' languages for that room.
Users answer, Accenture Bot stores users' language choices and determines which translation language pairs are needed in a given session. Accenture Bot sends room information and join requests to the language pair-dedicated Translation robots, in addition to providing feedback to the users.
Users can then chat, being translated in the chat room.

These four phases are presented in greater detail below for the AIM and MSN settings.

### Invitation phase

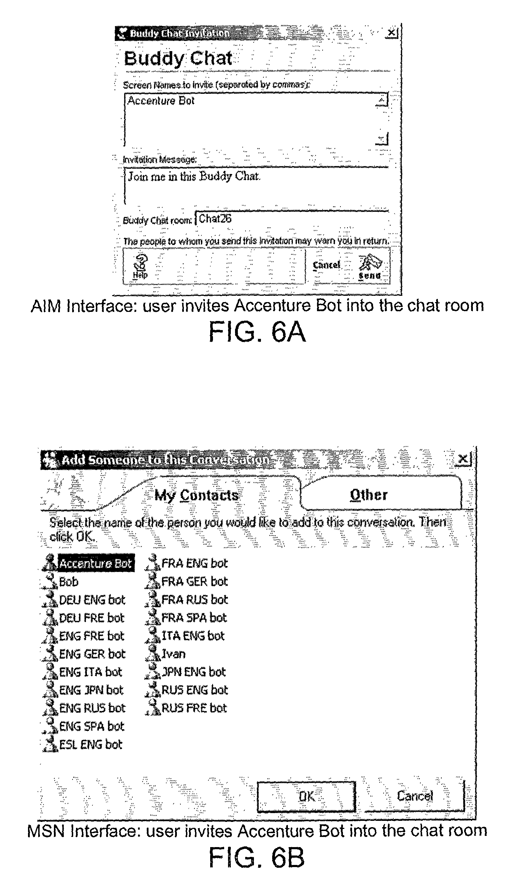

For AIM a characteristic screen interface is shown in Figure 6A. Using the AOL AIM client software (http://aim.aol.com), a user invites Accenture Bot into the chat room where translation services are needed. Accenture Bot automatically accepts and joins the Chat Room.

For MSN a characteristic screen interface is shown in Figure 6B. Using the MSN Messenger client software (http://messenger.msn.com/), a user invites Accenture Bot into the conversation where translation services are needed. Accenture Bot automatically accepts and joins the conversation.

Only one user needs to invite Accenture Bot. In either implementation, users may be present when Accenture Bot joins the session or may subsequently join. Accenture Bot may be invited at anytime. Any user present in the chat room when the Accenture Bot enters or entering the chat room when Accenture Bot is present will be able to use the translation service.

### Message interaction

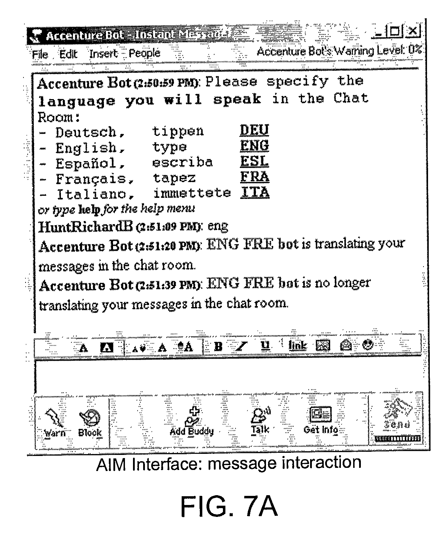

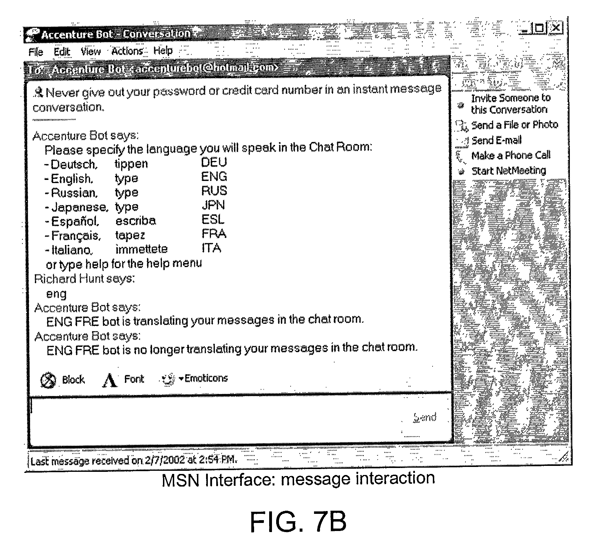

Accenture Bot sends a private welcome message to any user present in the room or entering it. This message is a question to which the user must answer with their language choice. Following this Accenture Bot process, feedback will be sent to users to let them know their translation status (i.e., when a robot starts or stops translating them). For AIM a characteristic screen interface is shown in Figure 7A. For MSN a characteristic screen interface is shown in Figure 7B.

### Hidden invitations

After storing users' language choices, Accenture Bot determines automatically all language pairs and invites the available translation robots specifying the users to be translated. Accenture Bot continues to exchange commands and feedback with the Translation robots through a hidden channel.

### Multi-user messages

When receiving messages from users, the dedicated translation robots providing translation to the senders will translate the message and send the translated message. Accenture Bot will never act on incoming messages to multi-user sessions.

Accenture Bot never sends messages to multi-user sessions. Any feedback or information relevant to a single user is communicated via the private single-user session created when the user is prompted for his language choice.

Note that in general it is not possible to guarantee message synchronization between incoming messages and outgoing translated messages as the messaging service is hosted by a third party so that Accenture Bot does not have control over the ordering of message flow.

### Advanced features

Accenture Bot responds to the following commands when received from users.

### !list (List users)

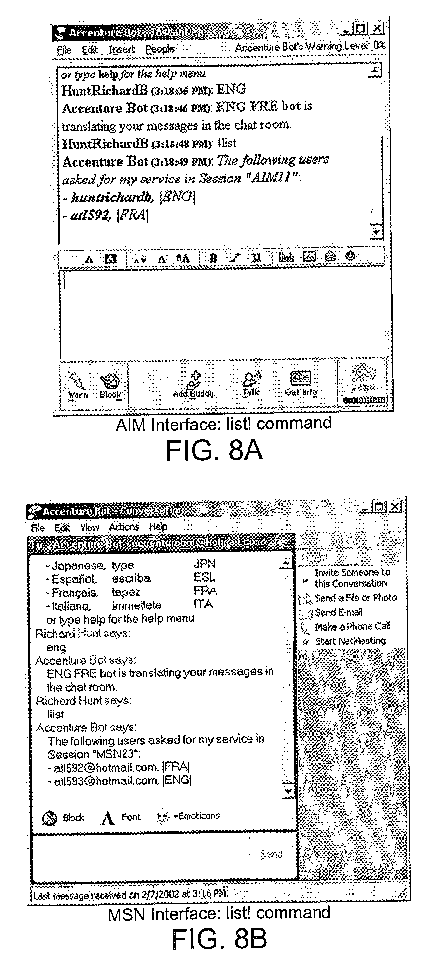

In order to provide information on the service status to the users, Accenture Bot answers a list command ("!list), which should be invoked in the private single-user session created when the user was prompted for their language choice. Accenture Bot replies with a message specifying for all the chat rooms the user belongs to: all the roommate IDs that chose a language, plus their language choice. For AIM a characteristic screen interface is shown in Figure 8A. For MSN a characteristic screen interface is shown in Figure 8B.

### !off (Turn off the translation service for a user)

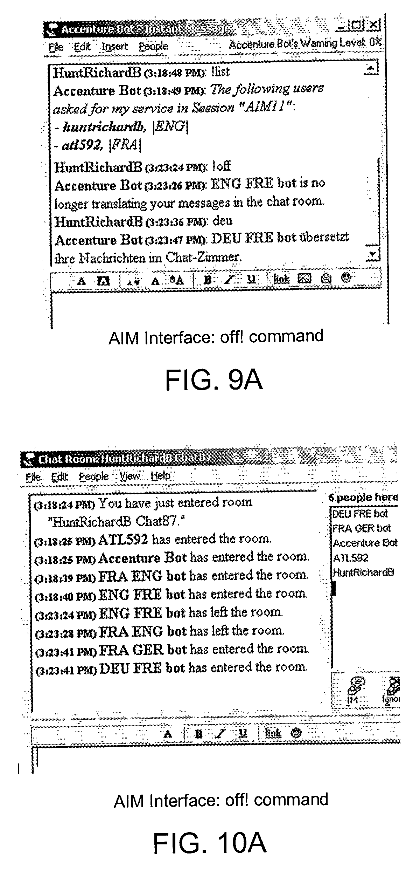

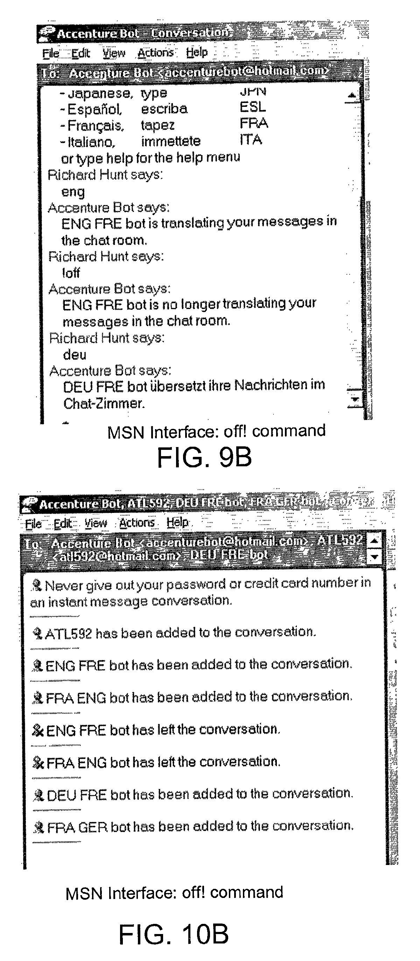

At any time during a session, users can stop the translation service concerning their messages through the "!off" command, which should be invoked in the private single-user session created when the user was prompted for their language choice. In this case and based on users' language choices Accenture Bot will send commands to the translation robots present in order for them to stop translation and potentially quit the room. Additionally, after a "!off" command, the service may be reactivated by sending to Accenture Bot a new language choice via the private single-user session (even though it is not in answer to the Accenture Bot question). For AIM characteristic screen interface are shown in Figures 9A and 10A. For MSN characteristic screen interfaces are shown in Figures 9B and 10B.

### Single-user functionality

Accenture Bot presents users with a simple help menu via messages in a single-user session. This is equivalent to an IM Session in AIM and a Conversation with two participants (a user + Accenture Bot) in MSN. Accenture Bot provides a brief user's guide for the multi-user function; and it points to the translation robots via messages for instant message translation (or "dictionary mode"). The recognized commands are presented below.

### help (generic help)

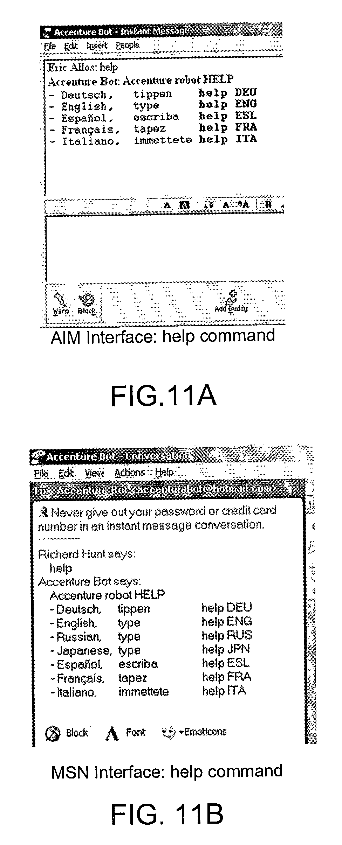

This command is processed by replying with a message that indicates the language specific help commands. For AIM a characteristic screen interface is shown in Figure 11A. For MSN a characteristic screen interface is shown in Figure 11B.

### help + language (language specific help (basic user's guide))

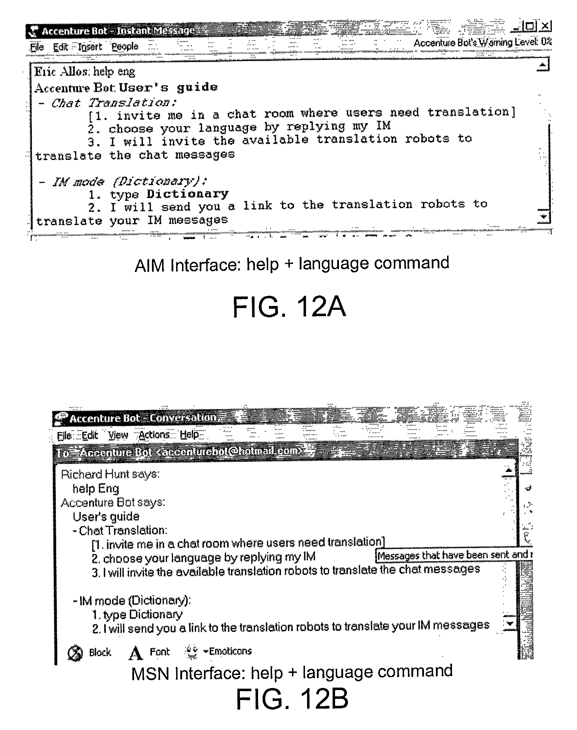

This command is answered in a given language and indicates to the user what he can do to activate the translation service in a chat room or to get a simple message translation. For AIM a characteristic screen interface is shown in Figure 12A. For MSN a characteristic screen interface is shown in Figure 12B.

### dictionary (translation robots portal)

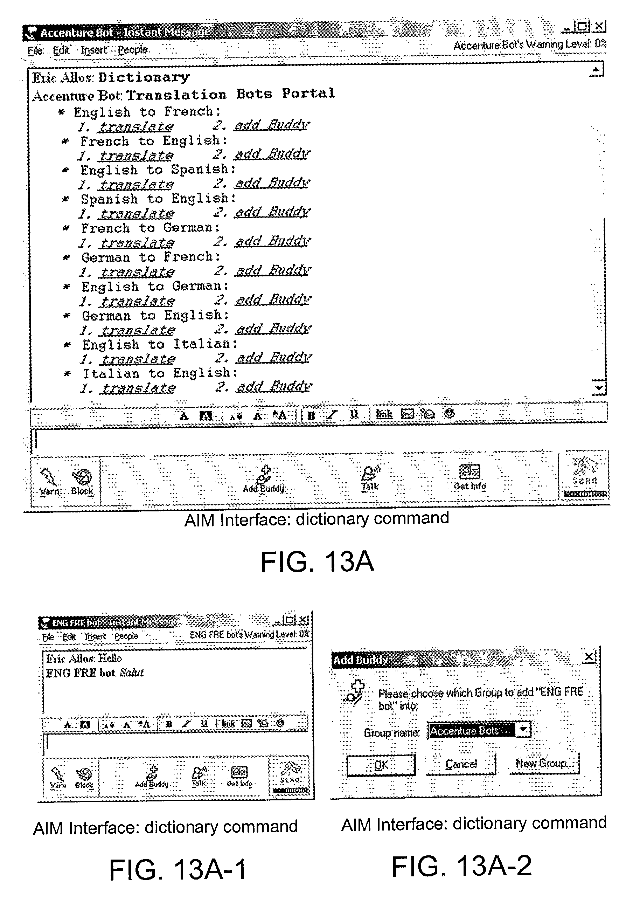

This command enables a user to translate a given message to another language without reference to another user's language. For AIM a characteristic screen interface is shown in Figure 13A. This command is answered in a given language (here in English) and under AIM links to the translation robots so that a user can click the link to translate a sample message (Figure 13A-1) or click a second link to add the translation robot in his buddy list (Figure 13A-2).

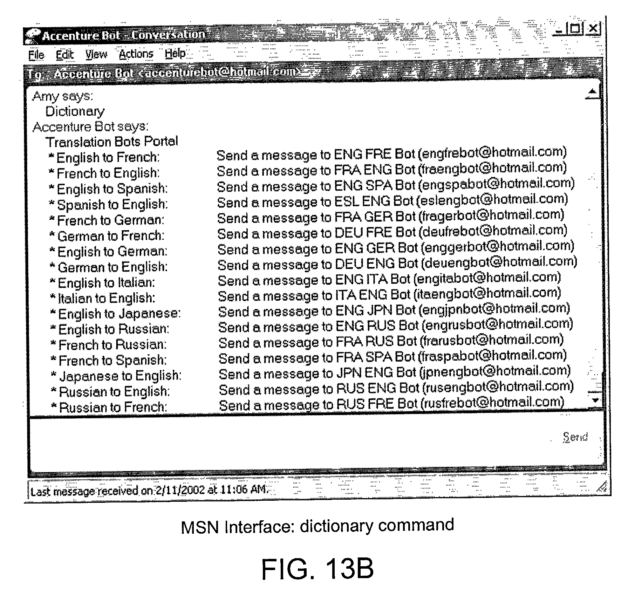

Under MSN, this ability to create links may not be available. In this case, invoking the Dictionary command provides a simple list of the Bots available and the languages they translate: For MSN a characteristic screen interface is shown in Figure 13B.

### Administrative functionality

Accenture Bot enables administrative functions by assignment of status to each user. In the preferred embodiment there are four possible status indicators. A BANNED status denotes a user whose messages are ignored. For active users, there are three possible categories: a DEFAULT or UNREGISTERED status, a REGISTERED status or an ADMINISTRATOR status. The status of a user is controlled either by direct commands by an ADMINISTRATOR as discussed below or by entries that determine status in an associated administration configuration file (e.g., a registration database or a banned database).

### BANNED status

Each translation robot (i.e., ChatBot) has a BANNED list of users (i.e., users who have the BANNED status). Any message coming from a BANNED user is then ignored. The BANNED user is then completely unable to interact with the robot. In general, the BANNED status is controlled by a BAN command and the UNBAN commands, which are only issued by an ADMINISTRATOR. (These commands are discussed in greater detail below.)

DEFAULT and REGISTERED users (not ADMINISTRATORS) might receive a BAN, which can be temporary or permanent. This BAN might come from an ADMINISTRATOR through a BAN command or from a (possibly definitive) parameterization in an associated administration configuration file. In general the BAN is automatic and time-limited for DEFAULT users.

Any BAN may be removed via a UNBAN command from an ADMINISTRATOR.

### ADMINISTRATOR status

ADMINISTRATORS have full possible control of the translation robots. They cannot be banned, can initiate Single-User Messaging functionality, send Multi-User Messaging session invitations and Multi-User Messaging messages to the robots. In addition the robots will recognize and process their administration commands.

### DEFAULT or UNREGISTERED status

Since the Screen Names of the translation robots (i.e. ChatBots) are publicly available, it is desirable to control the access to these robots. Therefore, DEFAULT users, will receive a notification saying they are not registered users, when they send messages or Multi-User Messaging session invitations to the robots (and unless they are on the BANNED list).

After the robot sends this message, it will temporarily put the user's screen name in its BANNED list and consequently ignore the user messages for a given time (parameterised in seconds in the administration configuration file). This avoids potential load increases due to non-registered users sending messages repeatedly. It prevents also users from repeatedly sending warnings to the robots.

DEFAULT users may click the link appearing as underlined in order to send an email to the appropriate ADMINISTRATORS and get rights.

### REGISTERED status

Only REGISTERED user should be able to invite Accenture Bot for obtaining translation services, both for a chat room or for a one -to-one conversation (i.e., dictionary mode).

Any user invited into a chat room where Accenture bot is present, whether they have REGISTERED, DEFAULT/UNREGISTERED or ADMINISTRATOR status, will be able to take advantage of the translation service provided by the chatbot.

REGISTERED users are allowed to send IM and CHAT messages. But they do not have the rights to send BAN command or any ADMINISTRATOR commands. They will be allowed to invite a robot into a chat session and will be able to use the translation service capability with any users who are not BANNED.

### Administrative Commands List and Descriptions

Four commands are specifically available to ADMINISTRATORS: "!CHATLIST", "!BANLIST", "!BAN: " and "!UNBAN: ". The following sections will detail each of these commands.

### List commands

The two following commands provide feedback to ADMINISTRATORS about the robots status and the users' rights.

### !CHATLIST (list all current chat rooms + users language choices)

This command provides information on the service status to the ADMINISTRATORS. Accenture Bot will be able to answer this command by sending in the Visible Communication window the list of all the Multi-User Messaging Sessions and all the chatters IDs that chose a language, plus their language choice.

### !BANLIST (list all current BANNED users)

This command provides information on the users currently ignored by the robots translation services. Accenture Bot will be able to answer this command by sending in the ADMINISTRATOR'S Visible Communication window the list of all the BANNED users IDs.

### Right Management Commands

The two following commands allow ADMINISTRATORS to take actions and modify users' rights.

### !BAN:userA[:userB[:...]] (ignore permanently users)

This command provides ADMINISTRATORS with the possibility of telling the robots to ignore users permanently. All users' actions will be ignored: messages and Session Invitations. Accenture Bot, when handling this command, will send feedback concerning the update.

Please note also that ADMINISTRATORS cannot be banned.

### !UNBAN:userA[:userB[:...]] (remove permanently users' BAN)

This command provides ADMINISTRATORS with the possibility of telling the robots to remove permanently users from the BANNED list. User will be given back DEFAULT rights or REGISTERED rights depending on their previous status. Accenture Bot, when handling this command, will send feedback concerning the update.

### Demonstration Scripts

This section describes representative demonstration scripts in the AIM and MSN environments for a conversation that includes two users who speak different languages. The content and meaning of the messages that will be exchanged is given here as an example. In general, the content is fully customizable depending on the desired communication as well as the chosen languages. Additionally, the number of users may vary and may even change during a chat room conversation. Each demonstration script includes: a setup phase, a preliminary phase, an invitation phase, a spoken-language choice phase, a business-oriented discussion phase, and a closing phase.

### Two-user Scenario - AIM

### Setup Phase

The universal translation robot (i.e., UnivBot) will log into the AIM network as a normal Client registered and visible as Accenture Bot. In order to be able to access its service, users will need to run an AIM Client with a registered account. (The AOL Client is downloadable at the following URL: http://aim.aol.com , and one can use the same URL to register AIM accounts.) Once the AIM client installed and running, one can add Accenture Bot to the users' Buddy lists.

### Preliminary Phase

As a preliminary matter, what is needed is: (1) two computers connected to the Internet, each having an AOL AIM client installed; and (2) two registered AIM accounts (e.g., by downloading AOL AIM Client or register accounts via http://aim.aol.com). The preliminary phase is outlined in five steps.

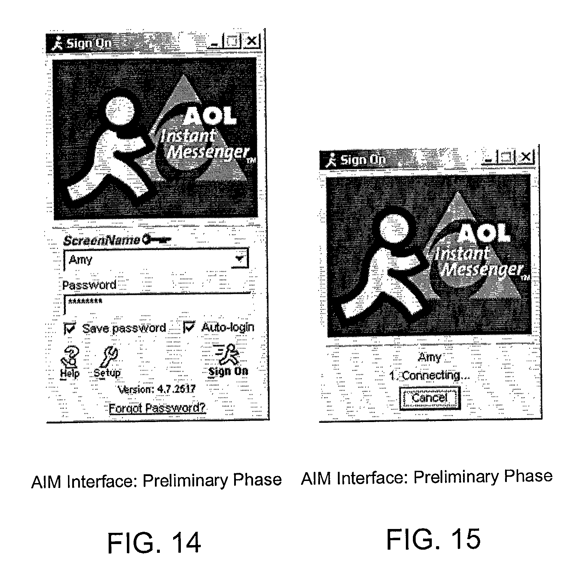

Step 1: On the first computer, start the AIM AOL client (Figure 14) and connect to the AIM network with a registered account (Figure 15); for the purpose of the script, an arbitrary name (e.g., Amy) is used as the first user. However, please note that any valid AIM screen name is appropriate. (Note that Amy must have REGISTERED privileges.) Figure 14 shows Amy signing in. Figure 15 shows Amy connecting.

Step 2: On the second computer, start the AIM AOL client and connect to the AIM network with the second registered account; for the purpose of the script, an arbitrary name (e.g. Bob) is used as the second user. However, please note that any valid AIM screen name is appropriate.

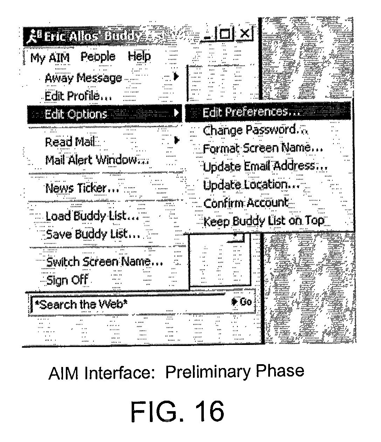

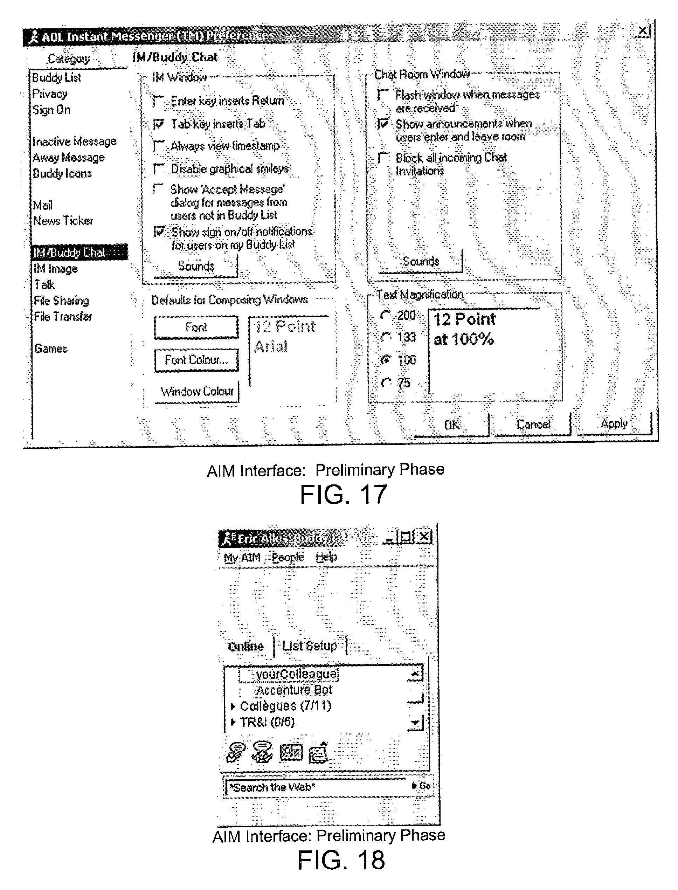

Step 3: Choose two highly contrasting fonts settings for Amy's AIM client and Bob's AIM Client. For example, choose two different colors like red and blue, two different styles like italic and bold and two different fonts, like Arial and Courier. This operation should be done once per AIM client for a better user experience. To achieve this, go in the AIM client menu bar, select "My AIM", select "Edit Options" and select "Edit Preferences." (Figure 16 shows the Edit Preferences menu.) Then, verify that the Show 'Accept Messages' dialog checkbox is unchecked and change the fonts settings in the Default for Composing Windows panel. (Figure 17 shows the AOL AIM Client version 4.7 preferences panel.)

Step 4. Check on Amy's Buddy list, that Accenture Bot and Bob appear as online. If it is not the case, check that Accenture Bot and Bob are in the Buddy list, if not add them. (Figure 18 shows Amy's AIM window and Yourcolleague acts as Bob. Both Accenture Bot and Bob appear online.)

Step 5. Check on Bob's Buddy list that Accenture Bot and Amy appear as online. If it is not the case, check that Accenture Bot and Amy are in the Buddy list, if not add them. (e.g., as a counterpart of Figure 18).

### Invitation Phase

The invitation phase is outlined in three steps.

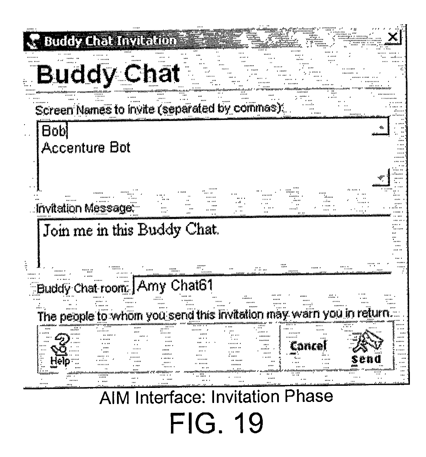

Step 1. Amy sends a Buddy Chat Invitation to both Bob and Accenture Bot. Figure 19 shows Amy inviting Bob and Accenture Bot

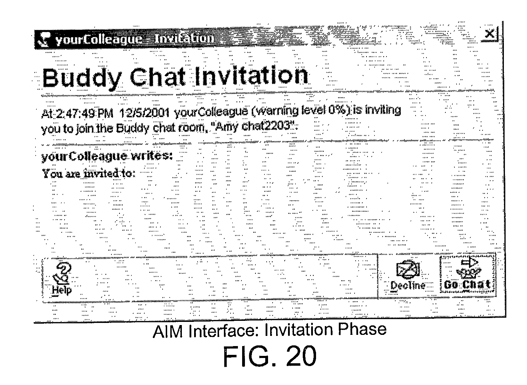

Step 2. Bob receives and accepts the invitation. Accenture Bot auto-accepts the invitation. Figure 20 shows Bob receiving the invitation to Amy's chat room.

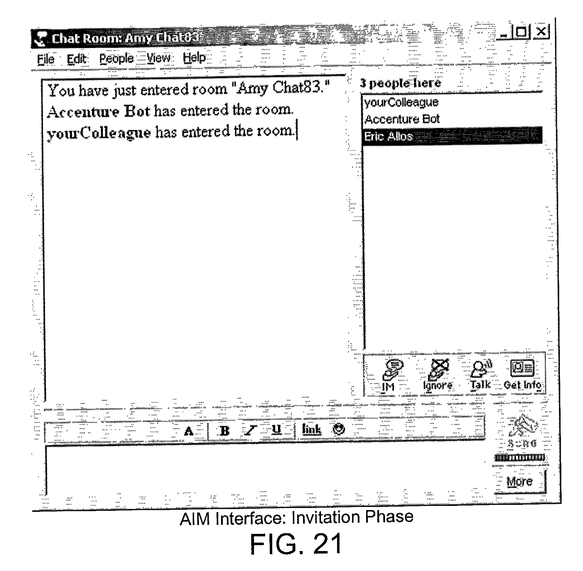

Step 3. Bob and Accenture Bot enter the room. Figure 21 shows Bob and Accenture Bot entering the room.

### Spoken Language Choice Phase

The spoken language choice phase is outlined in eight steps.

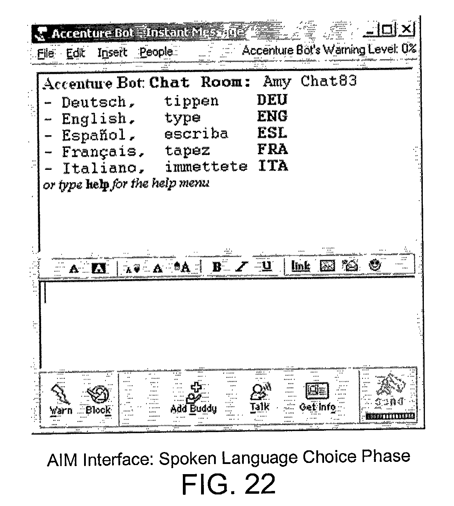

Step 1. Accenture Bot sends an IM message to both Amy and Bob As shown in Figure 22, the resulting IM window acts as a command interface. This message is asking Amy and Bob to reply with their spoken language choice. Figure 22 shows Amy receiving an IM message from Accenture Bot in a separate window

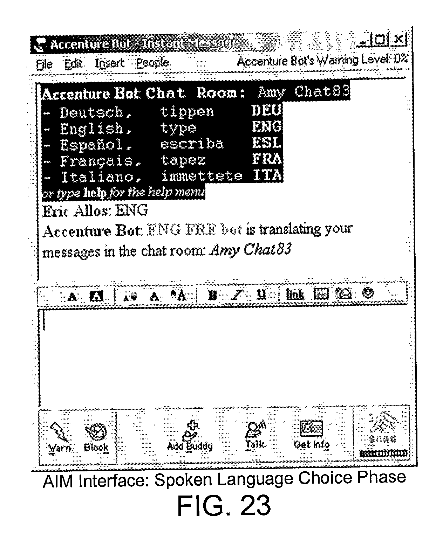

Step 2. Bob types and sends "FRA" to Accenture Bot in the IM window (counterpart of Figure 23). This selects French as Bob's spoken language.

Step 3. Amy types and sends "ENG" to Accenture Bot in the IM window as shown in Figure 23. This selects English as Amy's spoken language.

Step 4. Amy receives feedback specifying that she will now be translated by the translation robot ENG-FRE bot. Figure 23 shows Amy sending back her spoken language choice, here ENG.

Step 5. Bob receives feedback specifying that he will now be translated by the translation robot FRA-ENG bot (a counterpart of Figure 23).

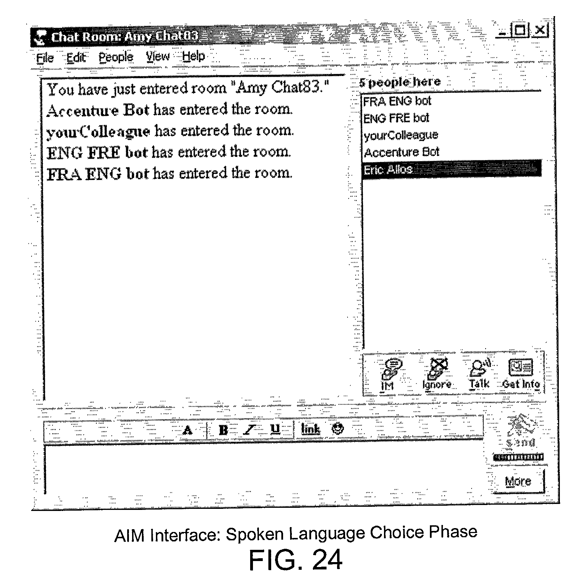

Step 6. ENG-FRE bot and FRA-ENG bot join the chat room. Figure 24. shows FRA ENG bot and ENG FRE bot entering the chat room

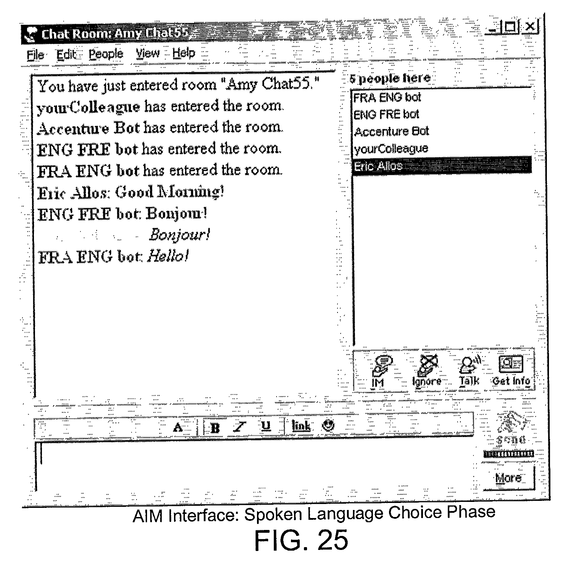

Step 7. Amy and Bob can now chat, being translated in the chat room. Amy and Bob start by saying "Good Morning" and "Bonjour" in their respective language (Fig 25). ENG-FRE bot and FRA-ENG bot display in the chat room the translation results. Figure 25 shows Amy and Bob saying "Hello!", here, bold for "Eric Allos" acting as Amy and italic for "yourColleague" acting as Bob.

Step 8. Both Amy and Bob can understand each other, their messages and their respective translation appear in the same font style. (See 3rd step in Preliminary Phase above.)

### Business-oriented discussion Phase

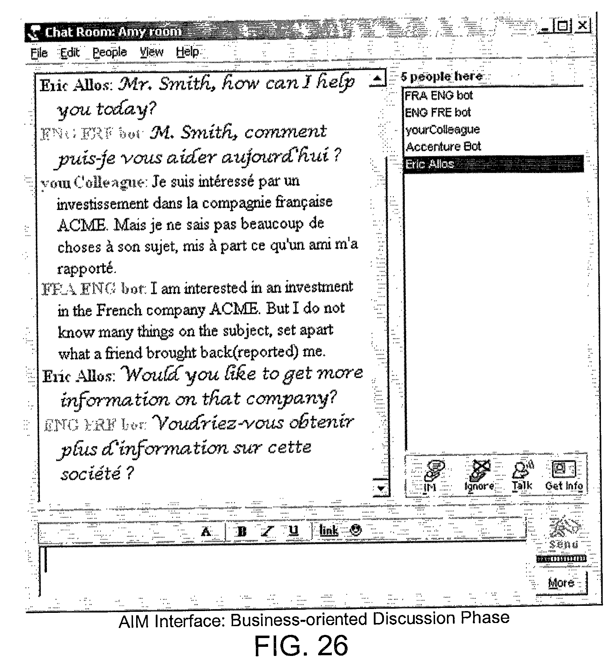

At this stage of the demo, Amy and Bob can speak in their respective mother tongues, and their messages will be translated into the other user's language. For a better user experience, the messages and their respective translations will be displayed in the same fonts. (See 3rd step in Preliminary Phase above) Figure 26 shows Amy and Bob chatting.

### Closing Phase

The closing phase is outlined in seven steps.

Step 1. Amy closes her Chat window

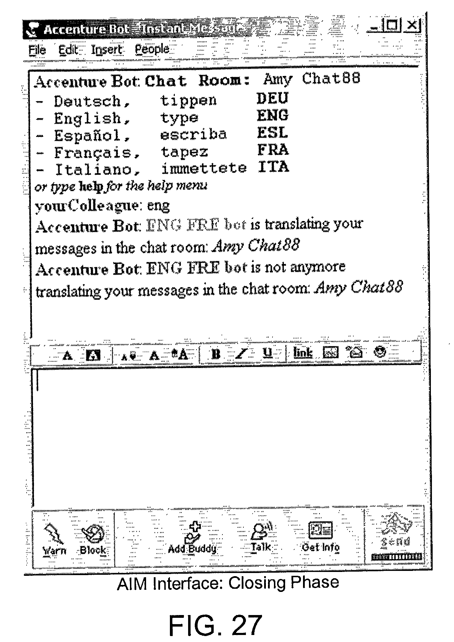

Step 2. Amy receives feedback specifying that she will no longer be translated by the translation robot ENG-FRE bot. Figure 27 shows Amy receiving feedback on her status

Step 3. Amy closes her Accenture Bot IM window

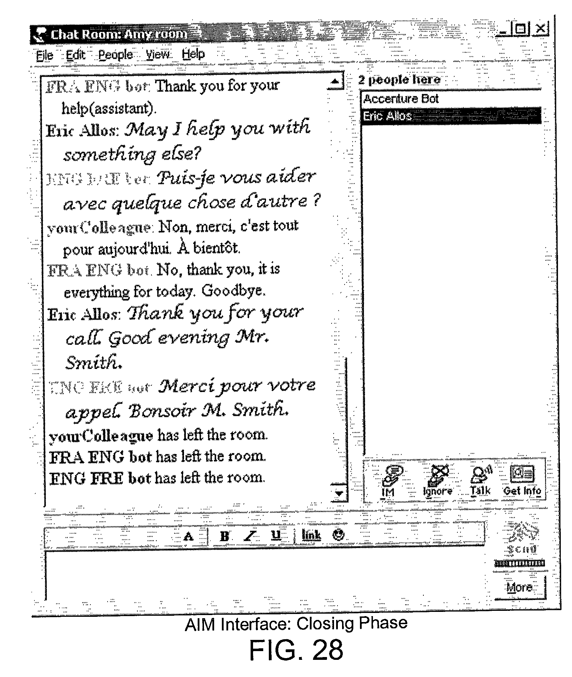

Step 4. Bob sees Amy, FRA-ENG bot and ENG-FRE bot leaving the Chat room. Figure 28 shows Amy (yourColleague here), FRA-ENG bot and ENG-FRE bot leave the room.

Step 5. Bob receives feedback specifying that he will no longer be translated by the translation robot FRA-ENG bot (i.e., a counterpart of Fig 27).

Step 6. Bob closes his Accenture Bot IM window.

Step 7. Bob closes his Chat window.

### Two-user Scenario - MSN

### Setup Phase

The universal translation robot (i.e., UnivBot) will log onto the MSN network as a normal Client registered and visible as Accenture Bot. In order to be able to access its service, users will need to run an MSN Messenger Client with a registered account. (The MSN Messenger Client is downloadable at the following URL: http://messenger.msn.com, and one can use the same URL to register MSN accounts.) Once the MSN client is installed and running, one can add Accenture Bot to the users' Contact list.

### Preliminary Phase

As a preliminary matter, what is needed is: (1) two computers connected to the Internet, each having an MSN Messenger client installed; and (2) two registered MSN accounts (e.g., by downloading MSN Messenger Client or register accounts via http://messenger.msn.com). The preliminary phase is outlined in five steps.

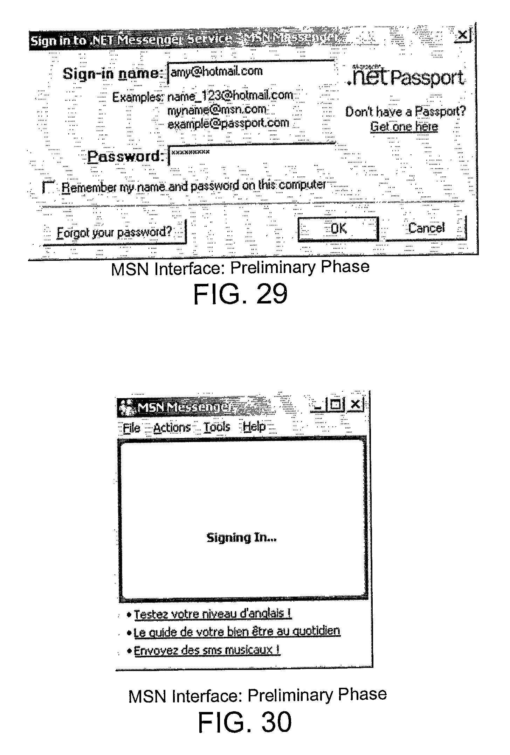

Step 1. On the first computer, start the MSN Messenger client (Figure 29) and connect to the MSN network with a registered account (Figure 30); for the purpose of the script, we will use an arbitrary name (e.g., Amy) as the first user. However, please note that any valid MSN screen name is appropriate. (Note that Amy must have REGISTERED privileges.) Figure 29 shows Amy signing in. Figure 30 shows Amy connecting.

Step 2. On the second computer, start the MSN Messenger client and connect to the MSN network with the second registered account; for the purpose of the script, we will use an arbitrary name (e.g. Bob) as the second user. However, please note that any valid MSN screen name is appropriate.

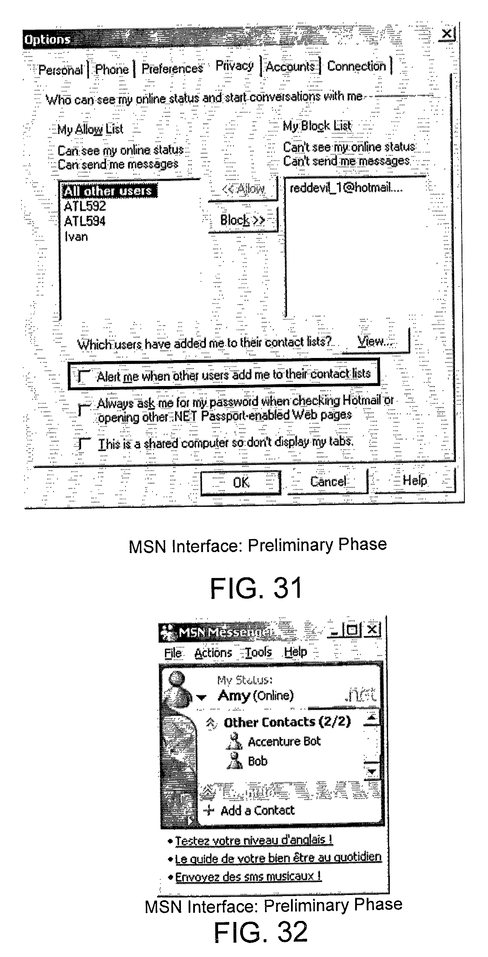

Step 3. Verify that the option for "Alert me when other users add me to their contact lists" checkbox is unchecked under Tools->Options->Privacy. (Figure 31 shows the MSN Messenger 4.5 Options panel. ) This operation should be done once per MSN client, important for a better user experience

Step 4. Check on Amy's Contact list, that Accenture Bot and Bob appear as online. If this is not the case, check that Accenture Bot and Bob are in the Contact list, if not add them. Figure 32 shows Amy's MSN window. Both Accenture Bot and Bob appear online

Step 5. Check on Bob's Contact list, that both Accenture Bot and Amy appear as online. If this is not the case, check that Accenture Bot and Amy are in the Contact list, if not add them. (e.g., as a counterpart of Figure 32).

### Invitation Phase

The invitation phase is outlined in three steps.

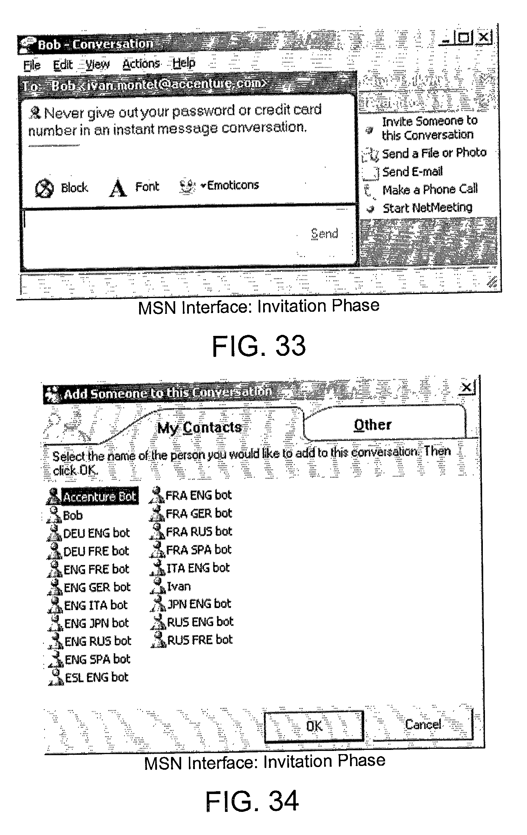

Step 1. Amy starts a conversation with Bob. Figure 33 shows Amy starting a conversation with Bob.

Step 2. Amy sends an invitation to Accenture Bot to join the conversation. Figure 34 shows Amy inviting Accenture Bot into the conversation.

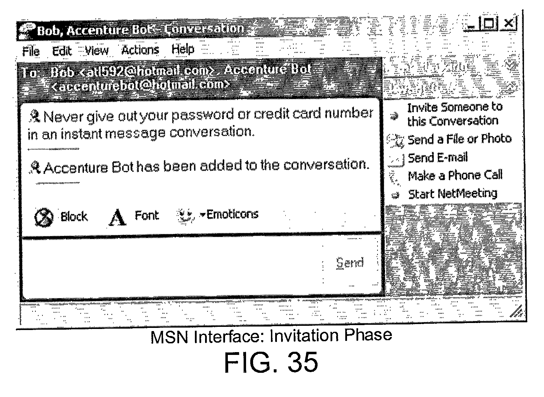

Step 3. Accenture Bot auto-accepts the invitation and enters the conversation. Figure 35 shows Accenture Bot joining the conversation initiated by Amy.

### Spoken Language Choice Phase

The spoken language choice phase is outlined in eight steps.

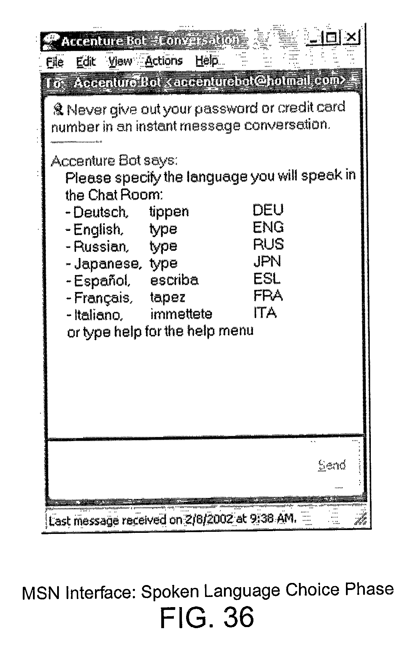

Step 1. Accenture Bot sends a message to both Amy and Bob. As shown in Figure 36, the resulting window acts as a command interface. This message is asking Amy and Bob to reply with their spoken language choice. Figure 36 shows Amy receiving a message from Accenture Bot in a separate window

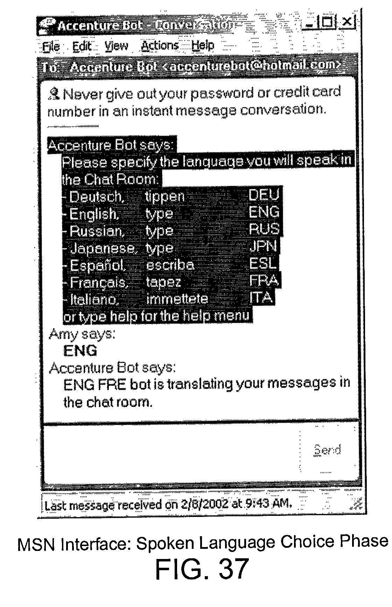

Step 2. Bob types and sends "FRA" to Accenture Bot in the window (as a counterpart of Figure 37). This selects French as Bob's spoken language.

Step 3. Amy types and sends "ENG" to Accenture Bot in the window as shown in Figure 37. This selects English as Amy's spoken language.

Step 4. Amy receives feedback specifying that she will now be translated by the translation robot ENG-FRE bot. Figure 37 shows Amy sending back her spoken language choice, here ENG.

Step 5. Bob receives feedback specifying that he will now be translated by the translation robot FRA-ENG bot (as a counterpart of Figure 37).

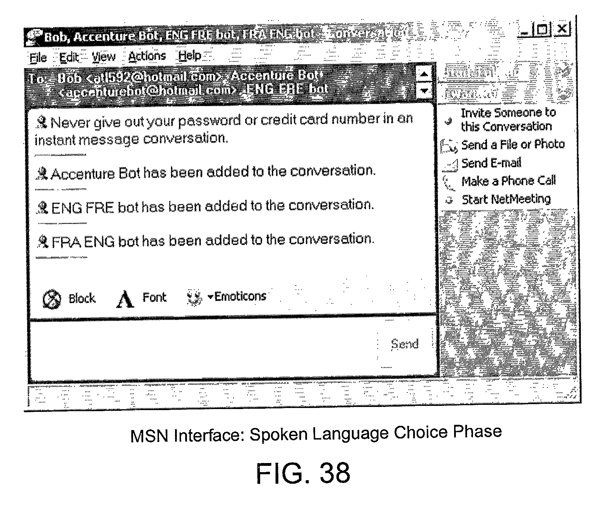

Step 6. ENG-FRE bot and FRA-ENG bot join the original conversation. Figure 38 shows FRA-ENG bot and ENG-FRE bot enter the conversation.

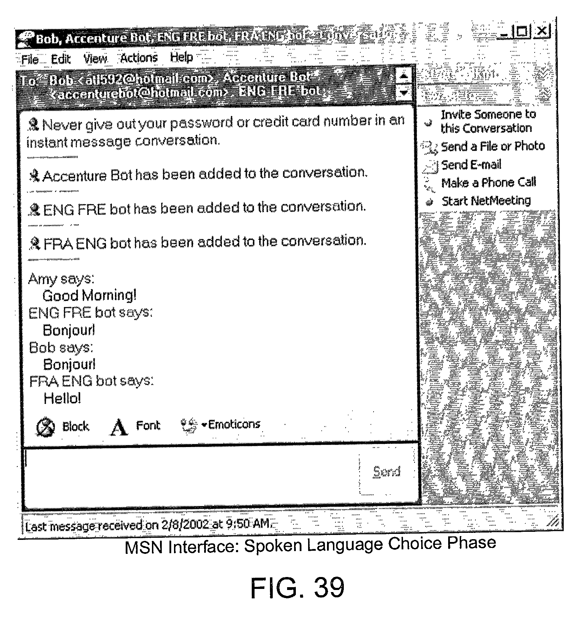

Step 7. Amy and Bob can now chat, being translated in the conversation. Amy and Bob start by saying "Good Morning" and "Bonjour" in their respective language (Figure 39). ENG-FRE bot and FRA-ENG bot display in the conversation the translation results. Figure 39 shows Amy and Bob saying "Hello!"

Step 8. Both Amy and Bob can understand each other.

### Business-oriented discussion Phase

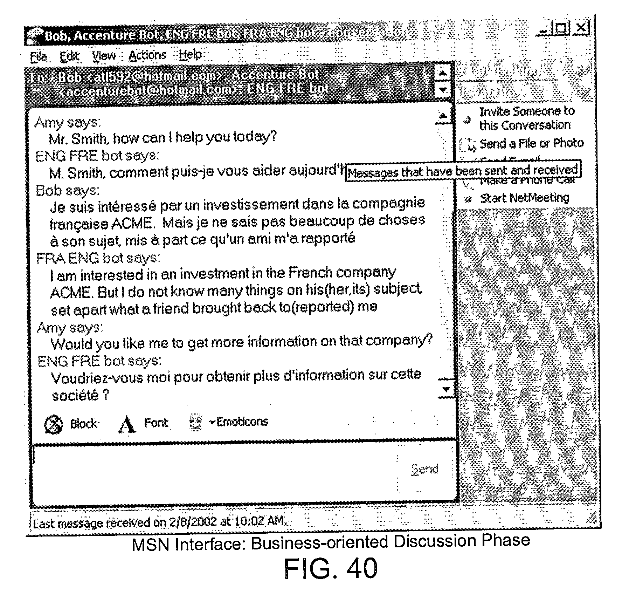

At this stage of the demo, Amy and Bob can speak in their respective mother tongues, and their messages will be translated into the other user's language. For a better user experience, the messages and their respective translations will be displayed in the same fonts. (See 3rd step in Preliminary Phase above.) Figure 40 shows Amy and Bob chatting.

### Closing Phase

The closing phase is outlined in seven steps.

Step 1. Bob closes his Chat window

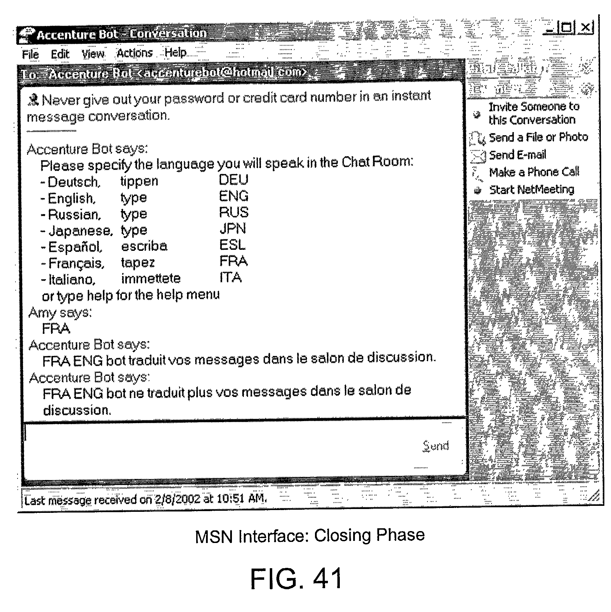

Step 2. Bob receives feedback specifying that he will no longer be translated by the translation robot FRA-ENG bot. Figure 41 shows Bob receiving feedback on his status.

Step 3. Bob closes his Accenture Bot window.

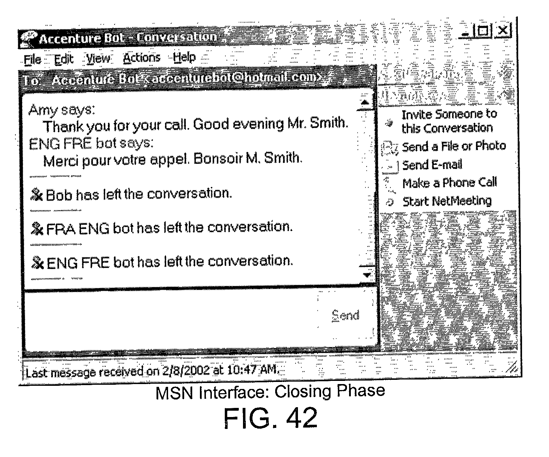

Step 4. Amy sees Bob, FRA-ENG bot and ENG-FRE bot leaving the Conversation. Figure 42 shows Bob, FRA ENG bot and ENG FRE bot leave the conversation.

Step 5. Amy receives feedback specifying that she will no longer be translated by the translation robot ENG-FRE bot (i.e., as a counterpart of Figure 41).

Step 6. Amy closes her Accenture Bot window.

Step 7. Amy closes her Chat window.

### Summary

Although only certain exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

## Claims

1. An automatic portal unit for an IM system that provides automatic IM services, the IM system including a server connected to the automatic portal unit, at least one client connected to the server, and at least one automatic service unit connected to the server, and the automatic portal unit including executable instructions for
receiving a service-activation input from a first client, and
configuring a first automatic service unit to provide services to selected clients based on the service-activation input so that the first automatic service unit provides service responses when receiving communications from the selected clients.

2. An automatic portal unit as claimed in claim 1, wherein
the first automatic service unit connects to an external service device, the external service device being adapted to receive external service requests and to send external service responses that enable service responses from the first automatic service unit, and
the act of configuring the first automatic service unit includes enabling the first automatic service unit to access the external service device.

3. An automatic portal unit as claimed in claim 1, wherein
the IM system further includes a service gateway connected to the first automatic service unit, the service gateway connecting to a plurality of external service devices, each external service device being adapted to receive external service requests and to send external service responses that enable service responses from the first automatic service unit, and
the act of configuring the first automatic service unit includes enabling the first automatic service unit to access a first external service device through the service gateway.

4. An automatic portal unit as claimed in claim 1, wherein the automatic portal unit further includes executable instructions for:
receiving a service-deactivation input from the first client, and
configuring the first automatic service unit to stop providing services to the selected clients based on the service-deactivation input.

5. An automatic portal unit as claimed in claim 1, wherein
the automatic portal unit maintains a status for at least one client corresponding to privileges for the automatic IM services.

6. An automatic service unit for an IM system that provides automatic IM services, the IM system including a server connected to the automatic service unit, an automatic portal unit connected to the server, and at least one client connected to the server, and the automatic service unit including executable instructions for
accepting a configuration from the automatic portal unit to provide services to selected clients, and
providing service responses when receiving communications from the selected clients if the automatic service unit is configured to provide services to the selected clients.

7. An automatic service unit as claimed in claim 6, wherein
the automatic service unit connects to an external service device, the external service device being adapted to receive external service requests and to send external service responses that enable service responses from the first automatic service unit, and
the automatic service unit includes executable instructions for accessing the external service device if the automatic service unit is configured to provide services to the selected clients.

8. An automatic service unit as claimed in claim 6, wherein
the IM system further includes a service gateway connected to the first automatic service unit, the service gateway connecting to a plurality of external service devices, each external service device being adapted to receive external service requests and to send external service responses that enable service responses from the first automatic service unit, and
the automatic service unit includes executable instructions for accessing a first external service device through the service gateway if the automatic service unit is configured to provide services to the selected clients.

9. An automatic service unit as claimed in claim 6, wherein the automatic service unit further includes executable instructions for
accepting a configuration from the automatic portal unit not to provide services to the selected clients, and
providing no service responses when receiving communications from the selected clients if the automatic service unit is configured not to provide services to the selected clients.

10. A unit as claimed in any one of claims 1, 4, 5, 6 and 9, wherein the services include translation services.

11. A unit as claimed in any one of claims 2, 3, 7 or 8, wherein the external service device provides specialized language translation from a first language to a second language.

12. An instant messaging (IM) system for providing automatic IM services, comprising:
a server;
at least one client connected to the server;
an automatic portal unit according to any one of claims 1, 2, 3, 4, 5, 10 and 11, connected to the server; and
at least one automatic service unit according to any one of claims 6, 7, 8, 9, 10 and 11 connected to the server, wherein
if the automatic portal unit receives a service-activation input from a first client, the automatic portal unit configures a first automatic service unit to provide services to selected clients based on the service-activation input, and
if the first automatic service unit is configured to provide services to the selected clients, the first automatic service unit provides service responses when receiving communications from the selected clients.

13. A method for providing automatic IM services in an IM system, the IM system including a server, at least one client connected to the server, an automatic portal unit connected to the server, and at least one automatic service unit connected to the server, and the method comprising:
receiving a service-activation input at the automatic portal unit, and
configuring a first automatic service unit to provide services to selected clients based on the service-activation input so that the first automatic service unit provides service responses when receiving communications from the selected clients.

14. A method as claimed in claim 13, wherein the act of configuring the first automatic service unit includes enabling the first automatic service unit to access an external service device connected to the first automatic service unit, the external service device being adapted to receive external service requests and to send external service responses that enable service responses from the first automatic service unit.

15. A method as claimed in claim 13, wherein the act of configuring the first automatic service unit includes enabling the first automatic service unit to access a first external service device through a service gateway connected to the first automatic service unit, the service gateway being connected to a plurality of external service devices, and each external service device being adapted to receive external service requests and to send external service responses that enable service responses from the first automatic service unit.

16. A method as claimed in claim 13, further comprising:
receiving a service-deactivation input at the automatic portal unit, and
configuring the first automatic service unit to stop providing services to the selected clients based on the service-deactivation input.

17. A method as claimed in claim 13, further comprising:
maintaining a status for at least one client corresponding to privileges for the automatic IM services.

18. A method for providing automatic IM services in an IM system, the IM system including a server, at least one client connected to the server, an automatic portal unit connected to the server, and at least one automatic service unit connected to the server, and the method comprising:
accepting a configuration at a first automatic service unit to provide services to selected clients, and
providing service responses when the first automatic service unit receives communications from the selected clients if the first automatic service unit is configured to provide services to the selected clients.

19. A method as claimed in claim 18, wherein the act of providing service responses includes accessing an external service device connected to the first automatic service unit, the external service device being adapted to receive external service requests and to send external service responses that enable providing service responses.

20. A method as claimed in claim 18, wherein the act of providing service responses includes accessing a first external service device through a service gateway connected to the first automatic service unit, the service gateway being connected to a plurality of external service devices, and each external service device being adapted to receive external service requests and to send external service responses that enable providing service responses.

21. A method as claimed in claim 18, further comprising:
accepting a configuration at the first automatic service unit not to provide services to the selected clients, and
providing no service responses when the first automatic service unit receives communications from the selected clients if the first automatic service unit is configured not to provide services to the selected clients.

22. A method as claimed in any one of claims 13, 15, 17, 18 and 21, wherein the services include translation services.

23. A method as claimed in any one of claims 14, 16, 19 and 20, wherein the external service device provides specialized language translation from a first language to a second language.

24. Computer program product comprising executable instructions for implementing the method of any one of claims 13 to 23.
